# EUROPEAN PATENT SPECIFICATION

(11) **EP 2 674 275 B1**
(45) Date of publication and mention of the grant of the patent: **01.11.2017**
(21) Application number: 13171526.0
(22) Date of filing: 11.06.2013
(51) Int. Cl.: B29C 43/24, B29C 43/28, B29C 47/32, B29C 37/00

(54) **De-aerating device of a ribbon of elastomer and/or plastic material in an intermediate or final phase of calendering**
Entlüftungsvorrichtung eines Bandes aus Elastomer- und/oder Kunststoffmaterial in einer Zwischen- oder Endphase beim Kalandrieren
Dispositif de désaération d'un ruban d'élastomère et/ou en matière plastique dans une phase intermédiaire ou finale de calandrage

(30) Priority: 12.06.2012 IT MI20121010
(43) Date of publication of application: 18.12.2013
(73) Proprietor: Comerio Ercole S.p.A., 21052 Busto Arsizio (Varese) (IT)
(72) Inventor: Lualdi, Renato, 21052 Busto Arsizio VA (IT)
(74) Representative: Montelatici, Linda Anna

(56) References cited:
- WO-A1-2010/044839
- DE-A1- 4 039 729
- US-A- 2 072 597
- US-A- 3 765 817
- US-A- 3 849 174
- US-A- 3 969 458

## Description

### BACKGROUND

### Technical field

The present disclosure relates in general to the formation in continuous mode of a ribbon of constant width and thickness of a feed material or mixture yet in a plastic state by laminating it along a lamination line or a multi-roll calender, typically having two or more pairs of laminating rolls and in particular to a de-aerating device by rupturing trapped air bubbles that accidentally form in the plastic material because of entrapment of air in a feed bank of the plastic material upstream of the nip of a first pair of laminating rolls.

### Prior Art

In a traditional calendering process of plastic material or of a elastomer material yet in a plastic state (for example rubber), the feed material is continuously distributed in a form of an extruded string that may have a round, elliptic or more often a flat shape, in an inlet zone upstream of the nip between the first pair of laminating rolls of the calender, uniformally along the whole width of the rolls in order to constitute and maintain a sufficient mass of feed material over the converging surfaces of the rolls, forming a so-called "bank". The bank of feed material has an irregular shape due to the manner in which the continuous strip of material is fed by gravity by a system of oscillating transversally conveyors. Because of the stickness of the feed material yet in a plastic state and its rheologic characteristics, the distribution across the width of the nip region can hardly be perfectly regular. Moreover, the counter rotation of the two rolls, generally at different tangential velocities, induces within the bank material revolving drag motions which, because of the characteristics of the material, leads to entrapment of pockets of air that are eventually dragged through the nip between the pair of rolls of the calender and therefore remain in the calendered sheet, especially when it is relatively thick. For the majority of applications, air pockets that may have remained within the calendered material do not create particular problems. However, if to the final product must be assured uniformity of characteristics and particularly a perfectly smooth surface, entrapment of air must absolutely be avoided.

US-A-2072597 discloses a multi roll-pair calender with ordinary bank feed.

In case of rubber sheets destined to the fabrication of car-tires, air pockets trapped within the calendered sheet may cause odd behaviors of the tire, different from those foreseen in designing it and generally cause a faster degradation.

In case of applications intolerant to the presence of entrapped air, a technique commonly adopted is based on the use of so-called "roller head" systems, basically constituted by an extruder of the feed material having a flat extrusion head of width substantially similar to the width of the calendered sheet and of a calender generally composed of a single pair of laminating rolls functioning at the same tangential speed, placed immediately downstream of the flat extruder head.

US-A-3849174 discloses an apparatus for calendaring polymeric material with dedicated extrusion head delivering distinct sheets of extruded material over the surfaces of respective rolls of a laminating pair.

US-A-3765817 discloses an apparatus for calendaring polymeric material wherein the extrusion head has a rounded end protruding blade of volumetric obstruction that splits the outlet flow of the extruded material in an upper and a lower streams merging at the rounded end of the blade in the nip region ahead of the laminating rolls to prevent or minimize revolving motions of the plastic material and attendant air entrapments. Similar rounded end wedges are used for guiding the merging of two laminated ribbons immediately ahead of the nip of a laminating pair of rolls that joins them together.

By resorting to a "direct" feeding of an extruded flat sheet, coupled to the fact that the two rolls of the calender runs at identical tangential speeds, revolving motions in the plastic material of the feed sheet may be substantially avoided, thus limiting or in any case avoiding almost completely entrapment of air in the calendered sheet. In case a lamination of the calendered sheet of material yet in a plastic state with other materials, typically reinforcement cords (textiles or metallic) as it is typical in the tire industry, the calender requires the presence of other guide rolls and one or more additional pairs of laminating rolls.

This solution, though effective to reduce/eliminate problems tied to air entrapment in the calendered sheet has several drawbacks:
- a relatively high cost specially for large size plants due to the construction complexity of the flat extrusion head that must be sufficiently compact in order to be able of being physically installed within the side "shoulders" of the calender and at the same time slender and robust for withstanding large extrusion stresses, and easily disassembled in order to permit periodic cleaning of internal interstices;
- a complex layout because of the need to allow a separate shifting of whole machines (calender or extruder), typically for allowing a more frequent maintenance of the extruder screws;
- attendant risk of pollution of the plastic mixtures being extruded by concretions remained in interstices of the extrusion screw and of the flat extruder head;
- long offline times when changing production for cleaning the numerous organs for preventing pollution of the new material to be handled;
- augmented material waste, particularly for limited productions, because it is necessary to completely fill the extruder with material in an amount well beyond the net amount to be used for the limited production in order to ensure quality.

### SUMMARY OF THE DISCLOSURE

An applicant's objective was to find a solution to the problem of entrapment of air in the calendered material that would not imply to associate to the calender a dedicated feed extruder with an intrinsically costly flat head for directly feeding the material yet in a plastic state already in form of an extruded flat ribbon. After protracted investigations and tests the applicant has found a surprisingly effective though simple implement that dramatically reduces and practically eliminates the problems tied to air entrapment in the calendered material. The traditional feed system of extruded material in a yet plastic state or partially plastic state to be calendered in left unchanged because the de-aerating device of the applicant has a function of tearing open air pockets that may have remained trapped in the laminated sheet generated by a first pair of laminating rolls or several pairs, causing the release of entrapped air before the plastic material, freed of entrapped air pockets, is laminated anew between another downstread pair of laminating rolls, intermediate or final of the calender or of the calendering line.

Basically, the novel de-aerating device consists of a truncated wedge drawing head having a curved work surface, slidingly held in order to be able to advance the truncated end of the wedge toward the nip of an intermediate or final pair of laminating rolls, one of which carries the pre-laminated ribbon towards the nip of the pair. The material incrementally interferes with at least an end portion of the curved surface of the drawing head and finally with the end edge. Upon being drawn through such a narrow gap the material de-aerates itself because of the tearing open of trapped air pockets before flowing and filling an inlet space upstream of the nip, confined by the tip portion of the truncated wedge.

A hydraulic cylinder may be used for quickly move the truncated wedge drawing head toward the nip region between the pair of laminating rolls, whilst a position trimming of elevated precision for avoiding a rubbing contact with the surface of the mantel of the roll carrying the pre-laminated ribbon of the pair, may be alternatively realized either with a mechanical trimming device or with a high precision hydraulic control system like the one described in the prior Italian Patent No. 1365864 of the same applicant. The content of this prior document is here incorporated by expressed reference.

Contrary to the known "roller head" technique of directly extruding a feed ribbon of pre-arranged width and thickness to be subjected to a final lamination with the laminating rolls running at the same tangential speed, in the calender equipped with the truncated wedge drawing head or the present disclosure, the tangential speed of both pairs of laminating rolls remains independently adjustable in order to adapt frictional stresses to the requirements of the calendering process that forms the de-aerated ribbon of the desired thickness. The invention is defined in the annexed claims the content of which is intended to constitute part of the present description and here incorporated by expressed reference.

A detailed description follows of embodiments of the claimed invention with reference to the attached schematic drawings having a purely illustrative intent without any intent of limiting the scope of the claims to the exemplary embodiments described.

### BRIEF DESCRIPTION OF THE DRAWINGS

**Figure 1** shows a genesis of the technical problem by sketching the condition of risk to trap air in occluded pockets within the substantially plastic and generally tacky material.
**Figure 2** is a functional schematic view of a calender having three pairs of laminating rolls and equipped with the de-aerating device in form of a truncated wedge drawing head of the present disclosure.
**Figure 3** is a schematic enlargement of the nip zone and of the truncated wedge drawing head.

### DETAILED DESCRIPTION OF EXEMPLARY EMBODIMENTS

The addressed technical problem is to the aerate a laminated ribbon of a plastic or partially plastic material such as for example natural rubber, artificial rubber, a thermo-plastic or otherwise fluidized material, obtained by calendering the material starting from a so called "feed bank" of starting material that is continuously fed by distributing it in a more or less uniform manner over the full width of lamination, to an inlet region of the nip of a first pair of laminating rolls.

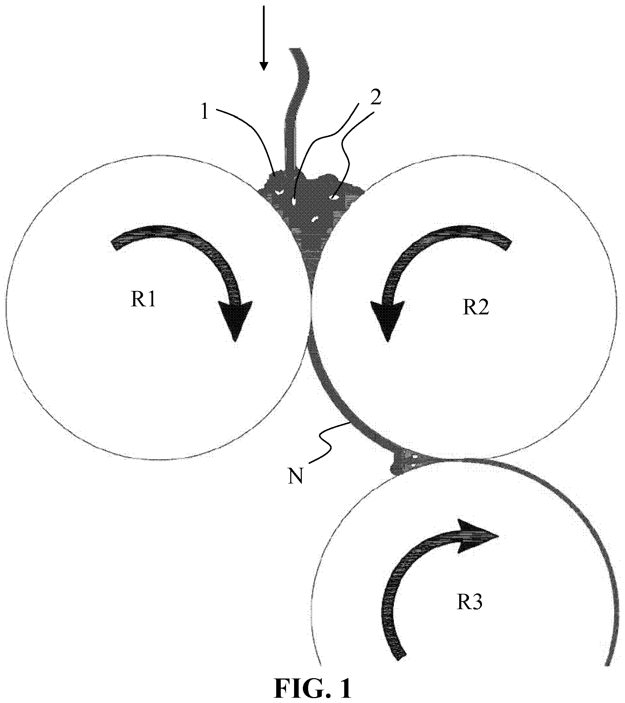

The partially sectional detail view of **Figure 1****,** shows the genesis of the technical problem by sketching the revolving motions that are induced in the bulk of the material 1, yet in a plastic state, of the feed bank in front of the nip, between the counter rotating rolls R1 and R2 of the first (inlet) pair of laminating rolls, that leads to the entrapment of air in occluded pockets 2. The feed material is normally added continuously, in a substantially even manner, across the whole width of lamination of the ribbon N and the counter rotation of the surfaces of the typically heated mantels of the rolls, running at different tangential speeds, induces revolving motions within the plastic material 1 of the bank and air may become entrapped in occluded pockets 2 that eventually are squeezed upon passing through the nip between the two laminating rolls of the inlet pair.

Depending on the different adjustment of the nip between the rolls R1-R2 of the first (inlet) pair and between the rolls R2-R3 of the successive pair and of the rheologic (plasto-elastic) characteristics of the material being calendered, the same air trapping mechanism may occur though in a reduced manner, even at the second pair of laminating rolls of a calender generally having several laminating roll pairs in succession.

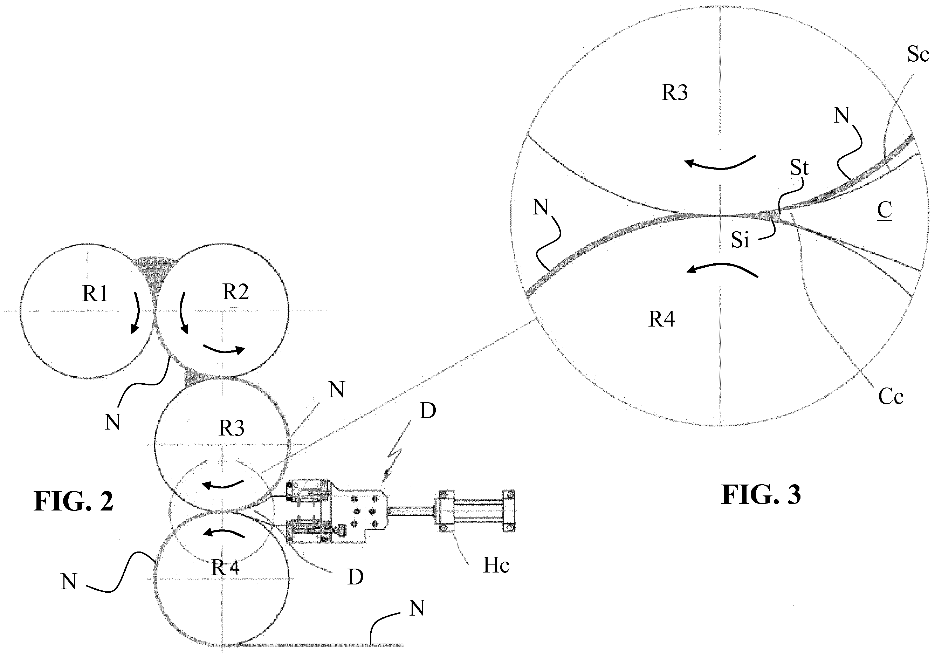

**Figure 2** shows an example of a four roll calender the rolls of which 1, 2, 3 and 4 are arranged in an inverted "L" figure defining three pairs of laminating rolls.

The novel de-aerating device of the present disclosure, indicated as a whole with D, acts at the inlet of the nip between a pair of laminating rolls downstream of the first (inlet) pair. In the illustrated example, the device D is in front of the nip between the third and final laminating pair of rolls R3-R4, following two preceding pairs of laminating rolls, crossing which, the laminated material may have entrapped air in occluded pockets in the ribbon N of material running toward the final laminating pair of rolls R3-R4.

As may be better observed in the enlarged detail view of **Figure 3****,** the de-aerating device D consists of a truncated wedge drawing head C having a curved work surface Sc. The head C is slidingly held in place in order to be able to advance the truncated end of the wedge toward the nip between the rolls R3 and R4 of the final pair of laminating rolls, one of which, R3, carries the ribbon N of pre-laminated material toward the nip of the pair. The end surface of the truncated wedge may be straight or, more preferably, concave.

A hydraulic cylinder Hc is used for quickly moving the truncated wedge drawing head C toward the nip region between the pair of laminating rolls R3-R4, in order to speed up its positioning in the operating-location. Thereafter, a precision trimming of the optimal working position, avoiding any rubbing with the surface of the roll carrying the ribbon, is carried out either with a dedicated mechanical trimming device or, more preferably, with a high precision hydraulic control system, for example the one described in prior Italian Patent No. 1,365,864, of the same applicant. The truncated wedge drawing head C may include heating elements for maintaining a pre-programmed temperature, similarly to the mantels of the laminating rolls.

The material of the ribbon N, typically having plasto-elastic characteristics, incrementally interferes with at least the end portion of the curved surface Sc of the drawing head C and finally with the end edge St of the curved work surface of the truncated wedge and, upon passing through the narrow gap, the material undergoes drawing, de-aerating itself because of the tearing open of the trapped air pockets, before flowing and filling the inlet space Si toward the nip between the rolls R3-R4, confined therein by the tip portion of the truncated wedge.

In other words, the working surface Sc and the edge St intercept and tear open any pocket of air trapped in the banks of ribbon material upstream of the nips of the preceding pairs of laminating rolls, causing the release of the trapped air before the plasto-elastic material, freed of trapped air and gathered into the space Si substantially confined by the truncated tip Cc of the drawing head C, is laminated anew between the downstream pair of rolls R3-R4.

## Claims

1. A de-aerating device (D) of an elastomer and/or plastic material of a laminated ribbon (N) in an intermediate or end phase of calendering, adapted to release air trapped in the material during at least a first phase of calendering feed bank material between laminating rolls of a preceding pair (R1-R2, R2.R3), comprising
a) a truncated wedge drawing head (C) with a curved work surface (Sc), slidingly held in order to advance the tip (Cc) of the truncated wedge toward the nip of an intermediate or final pair of laminating rolls (R3-R4), one of which (R3) carries the ribbon (N) to be laminated towards the nip of the pair;
b) means (Hc) of adjustment of the position of the head (C) so that the ribbon material incrementally interferes with at least a terminal portion of said curved work surface (Sc) and with a respective end edge (St) of the truncated wedge, causing the material to be drawn for tearing open trapped air pockets and de-aerating it before reaching an inlet space (Si) upstream of the nip between the two laminating rolls (R3-R4), confined by the tip (Cc) of the truncated wedge.

2. The device of claim 1, wherein the tip end surface of the truncated wedge is straight.

3. The device of claim 1, wherein the tip end surface of the truncated wedge is concave.

4. The device of claim 1, wherein the roll (R3) carrying the ribbon (N) toward the nip and/or said truncated wedge drawing head (C) have heating elements adapted to maintain a pre-programmed temperature of the ribbon material.

5. The device of claim 1, wherein said adjustment means (Hc) include mechanical devices driven by an electrical motor.

6. The device of claim 1, wherein said adjustment means (Hc) are implemented with a hydraulic trimming system.

## Patentansprüche

1. Eine Entlüftungsvorrichtung (D) für ein Elastomer- und/oder Kunststoffmaterial eines laminierten Bandes (N) in einer Zwischen- oder Endphase des Kalandrierens, die es erlaubt, in dem während einer ersten Phase des Kalandrierens zwischen Laminierwalzen eines vorangehenden Paares (R1-R2, R2, R3) geführten Bahnmaterials eingeschlossene Luft freizusetzen, umfassend:
a) einen keilstumpfförmigen Ziehkopf (C) mit einer gewölbten Arbeitsoberfläche (Sc), der gleitend gehalten ist, um die Spitze (Cc) des Kegelstumpfs vorzuschieben zu dem Spalt eines mittleren oder finalen Paares von Laminierwalzen (R3-R4), von denen eine (R3) das zu laminierende Band (N) zu dem Walzenspalt transportiert;
b) ein Mittel (Hc) zur Einstellung der Position des Kopfs (C) derart, dass das Bandmaterial mit wenigstens einem Endbereich der besagten, gewölbten Arbeitsoberfläche (Sc) und mit einer jeweiligen Endkante (St) des Keilstumpfs zunehmend in Konflikt gerät, was ein Ziehen des Materials zur Folge hat, um eingeschlossene Lufttaschen aufzureißen und es zu entlüften, bevor es einen stromaufwärts des Spaltes zwischen den zwei Laminierwalzen (R3-R4) angeordneten Einlaßraum (Si) erreicht, der durch die Spitze (Cc) des Keilstumpfs begrenzt wird.

2. Die Vorrichtung nach Anspruch 1, wobei die Stirnseite der Spitze des Keilstumpfs gerade ist.

3. Die Vorrichtung nach Anspruch 1, wobei die Stirnseite der Spitze des Keilstumpfs konkav ist.

4. Die Vorrichtung nach Anspruch 1, wobei die das Band (N) zu dem Spalt transportierende Walze (R3) und/oder der besagte keilstumpfförmige Ziehkopf (C) Heizelemente aufweist, welche geeignet sind, um eine vorprogrammierte Temperatur des Bandmaterials aufrechtzuerhalten.

5. Die Vorrichtung nach Anspruch 1, wobei das Einstellmittel (Hc) durch einen elektrischen Motor angetriebene mechanische Einrichtungen umfasst.

6. Die Vorrichtung nach Anspruch 1, wobei das Einstellmittel (Hc) mit einem hydraulischen Abgleichsystem ausgestattet ist.

## Revendications

1. Dispositif de désaération (D) d'un élastomère et/ou matière plastique d'un ruban laminé (N) dans une phase intermédiaire ou finale de calandrage, adapté pour libérer l'air piégé dans le matériau pendant au moins une première phase de calandrage de matériau de banc entre des rouleaux de laminage d'une paire précédente (R1-R2, R2.R3), comprenant :
a) une tête de tréfilage à cale tronquée (C) avec une surface de travail incurvée (Sc), maintenue de manière coulissante afin de faire avancer la pointe (Cc) de la cale tronquée vers la zone de pincement d'une paire intermédiaire ou finale de rouleaux de laminage (R3-R4), dont l'un (R3) transporte le ruban (N) à laminer vers la zone de pincement de la paire ;
b) des moyens (Hc) pour ajuster la position de la tête (C), de sorte que le matériau de ruban interfère de manière incrémentielle avec au moins une partie terminale de ladite surface de travail incurvée (Sc) et avec un bord d'extrémité (St) respectif de la cale tronquée, provoquant le tréfilage et la désaération du matériau par rupture des poches d'air piégé avant d'atteindre un espace d'entrée (Si) en amont de la zone de pincement entre les deux rouleaux de laminage (R3-R4), confiné par la pointe (Cc) de la cale tronquée.

2. Dispositif selon la revendication 1, dans lequel la surface d'extrémité de pointe de la cale tronquée est droite.

3. Dispositif selon la revendication 1, dans lequel la surface d'extrémité de pointe de la cale tronquée est concave.

4. Dispositif selon la revendication 1, dans lequel le rouleau (R3) transportant le ruban (N) vers la zone de pincement et/ou ladite tête de tréfilage à cale tronquée (C) ont des éléments chauffants adaptés pour maintenir une température préprogrammée du matériau de ruban.

5. Dispositif selon la revendication 1, dans lequel lesdits moyens d'ajustement (Hc) comprennent des dispositifs mécaniques entraînés par un moteur électrique.

6. Dispositif selon la revendication 1, dans lequel lesdits moyens d'ajustement (Hc) sont mis en oeuvre avec un système de coupe hydraulique.
